# EUROPÄISCHE PATENTSCHRIFT

(11) **EP 2 021 672 B1**
(45) Veröffentlichungstag und Bekanntmachung des Hinweises auf die Patenterteilung: **14.08.2019**
(21) Anmeldenummer: 07720158.0
(22) Anmeldetag: 23.05.2007
(51) Int. Cl.: F16L 13/02

(54) **VERBINDER FÜR BOHRROHRE UND MIT EINEM VERBINDER AUSGESTATTETES BOHRROHR**
CONNECTOR FOR DRILL PIPES, AND DRILL PIPE EQUIPPED WITH A CONNECTOR
RACCORD POUR TIGES DE FORAGE ET TIGE DE FORAGE ÉQUIPÉE D'UN TEL RACCORD

(30) Priorität: 24.05.2006 WO PCT/CH2007/000261
(43) Veröffentlichungstag der Anmeldung: 11.02.2009
(73) Patentinhaber: Broder, Mathias, 7320 Sargans (CH); Dell'Anna, Marcel, 7421 Summaprada (CH)
(72) Erfinder: Broder, Mathias, 7320 Sargans (CH); Dell'Anna, Marcel, 7421 Summaprada (CH)
(74) Vertreter: Hasler, Erich
(86) Internationale Anmeldenummer: PCT/CH2007/000261
(87) Internationale Veröffentlichungsnummer: WO 2007/134477

(56) Entgegenhaltungen:
- WO-A-92/15814
- WO-A-98/13574
- DE-A1-102004 009 416
- FR-A1- 2 562 983
- US-A- 5 219 187

## Beschreibung

Die Erfindung betrifft einen Verbinder für Bohrrohre gemäss dem Oberbegriff des Patentanspruchs 1. Die Erfindung betrifft auch ein mit einem derartigen Verbinder ausgestattetes Bohrrohr.

Bei allen Anwendungen von Tiefbohrungen, beispielsweise im Tiefbau, im Tunnelbau, für die Erstellung von Bohrungen für Erdwärmesonden usw., werden Bohranlagen eingesetzt, die eine möglichst hohe Bohrleistung erzielen. Dabei kommen beispielsweise Drehbohranlagen mit Bohrschnecken, oder Drehschlag-Bohranlagen mit Aussenhammer oder mit Innenhammer oder auch Doppelkopfbohranlagen zum Einsatz. Das Bohrgestänge dieser Bohranlagen besteht aus einer Kombination von Schlagstangen und Bohrrohren. Die Schlagstangen übertragen die Schlagenergie, während die Bohrrohre die Vorschubkraft sowie das Rotationsdrehmoment übertragen und ein Spülmedium bis zur Bohrlochsohle transportieren. Das Spülmedium, beispielsweise Luft, Wasser, Suspensionen, usw., dient zum Abtransport des an der Bohrlochsohle zerkleinerten Bohrguts, zum Kühlen des Bohrgestänges und in einem gewissen Masse auch zur Verringerung der Bohrlochreibung.

Berücksichtigt man, dass in der geothermischen Bohrtechnik, in der Erschliessung Öl- oder Gasvorkommen, bei allen Arten von Ankerbefestigungen im Tiefbau oder im Tunnelbau die Erstellung der Bohrung einen wesentlichen Anteil der Gesamtkosten ausmacht, ist unmittelbar einsichtig, dass angestrebt wird, den Bohrungsdurchmesser nur so gross wie unbedingt erforderlich zu erstellen. Bohrrohre sind modular aufgebaut und aus Rohrabschnitten von üblicherweise etwa 0.5 m bis 12 m zusammengesetzt. Für Spezialanwendungen kommen auch grössere Längen zum Einsatz. Für die Verbindung der Bohrrohre sind aus dem Stand der Technik verschiedene Techniken bekannt. Flanschverbindungen, Steckmuffenverbindungen oder Überschiebeschweissmuffenverbindungen kommen dabei üblicherweise nicht in Frage, da dadurch der Aussendurchmesser des Bohrrohres vergrössert wird. Wegen des zu übertragenden Rotationsdrehmoments kommen auch Stumpfschweissverbindungen nicht in Frage. Ausserdem sollen die Verbindungen der Bohrrohre auch wieder relativ leicht lösbar sein. Üblicherweise kommen daher Gewindeverbindungen für die Verbindung der Bohrrohre zum Einsatz. Spezielle Gewindeausbildungen, wie z.B. das aus der Erdölindustrie bekannte API Gewinde sollen dabei die Gängigkeit des Gewindes und dessen Festigkeit, die Drehmomentübertragung, die Übertragung axialer Schläge, die Verschmutzungsanfälligkeit usw. verbessern.

Bei Gewindeverbindungen wird üblicherweise ein mit einem Aussengewinde versehenes Zapfenstück eines Bohrrohrs mit einem mit einem Innengewinde versehenen Muffenstück eines anderen Bohrrohrs verbunden. Der Aussendurchmesser des Zapfenstücks ist zu seinem freien Ende leicht konisch verjüngt ausgebildet. Entsprechend weist das im Aussendurchmesser zylindrischen Muffenstück eine sich von seinem freien Ende nach innen leicht konisch verjüngende Aufnahmebohrung auf. Die Konizität des Zapfenstücks und der Aufnahmebohrung des Muffenstücks ist üblicherweise genormt (API Gewinde). Durch diese spezielle Ausbildung der Zapfen- und Muffenstücke bleibt der Aussendurchmesser des Bohrrohrs auch im Verbindungsbereich erhalten. Jedes Bohrrohr ist an seinem einen Längsende mit einem Zapfenstück und am anderen Längsende mit einem Muffenstück ausgestattet.

Prinzipiell könnten zwar die Zapfen- und Muffenstücke einstückig mit dem Bohrrohrabschnitt ausgebildet sein. Aus fertigungstechnischen Gründen und aus Kostengründen werden jedoch die Bohrrohre und Zapfen- oder Muffenstücke aufweisende Verbinder getrennt hergestellt. Während die Bohrrohre beispielsweise grosstechnisch in einem kostengünstigen Stahlzieh- oder Stahlwalzverfahren produziert werden, werden die Verbinder spanend hergestellt. Danach werden die Verbinder üblicherweise durch stumpfes Reibschweissen mit den Rohrenden verbunden. Beim stumpfen Reibschweissen entstehen durch verdrängtes Material an der Fügestelle ausserhalb und innerhalb des Bohrrohrs Schweisswülste. Während die aussen überstehenden Wülste durch Abdrehen relativ leicht entfernt werden können, ist eine Entfernung der innerhalb des Bohrrohrs befindlichen Schweisswülste, falls überhaupt, nur mit sehr grossem Aufwand möglich. Daher bleiben die innenliegenden Schweisswülste üblicherweise stehen. Die gegenüber der Rohrinnenwandung überstehenden Schweisswülste führen beim Durchströmen der Bohrrohre zu Wirbelbildungen beispielsweise im Spülmedium. Jeder Wirbel ist verantwortlich für einen Druckverlust des durchströmenden Mediums. Berücksichtigt man die grosse Anzahl von Bohrrohren, die bei einer tieferen Bohrung von beispielsweise 100 m bis 500 m und mehr zu dem Bohrgestänge zusammengefügt werden, ergibt sich aus der Vielzahl von innen überstehenden Schweisswülsten ein sehr hoher Druckverlust infolge von Wirbelbildungen. Dieser Druckverlust muss bei der Einspeisung des Spülmediums in das Bohrgestänge berücksichtigt werden und führt zu unnötig hohen Energiekosten. Die beim Durchströmen an den innenliegenden Schweisswülsten auftretenden Wirbel können auch zu lokal ungleichmässigen Belastungen des Bohrgestänges führen, die bei den eingesetzten hohen Drücken des Spülmediums von bis zu 300 bar und mehr nicht unberücksichtigt bleiben können.

In der Offenbarungsschrift WO98/13574 werden geschweißte Bohrrohre für den Einsatz im Tiefbau vorgestellt. Die verschweissten Rohre, die durch Reibschweißen zwischen Rohrabschnitt und Verbinderabschnitt hergestellt werden, zeichnen sich dadurch aus, dass die innere Schweisswulst einen Hohlraum unter dem angeschweissten Verbinderabschnitt komplett ausfüllt. Damit sollen strömungsdynamischen Probleme im Rohrinneren und eine mögliche Rissbildung aufgrund einer Ermüdungsbeanspruchung in der Schweißverbindung, vermieden werden.

Aufgabe der vorliegenden Erfindung ist es, den geschilderten Nachteilen der Verbinder für Bohrrohre des Stands der Technik abzuhelfen. Es soll ein Verbinder geschaffen werden, der eine problemlose Verbindung mit einem Längsende eines Bohrrohrs erlaubt, ohne dass es dabei zur Ausbildung von strömungstechnischen Hindernissen im Inneren des Rohres kommt. Dabei soll auf bekannte und erprobte Verbindungstechniken, insbesondere Schweisstechniken zurückgegriffen werden können. Auf eine kostspielige und aufwendige Nachbehandlung im Inneren des mit Verbindern ausgestatteten Bohrrohrs soll verzichtet werden können. Es soll auch ein Bohrrohr geschaffen werden, welches für die Verbindung mit anderen Bohrrohren ausgestattet ist und einen geringen Strömungswiderstand für ein durchströmendes Medium bietet.

Zur Lösung dieser Aufgaben ist ein Verbinder für Bohrrohre vorgeschlagen, welche die im kennzeichnenden Abschnitt des Patentanspruchs 1 angeführten Merkmale aufweist. Es ist auch ein Bohrrohr vorgeschlagen, welches mit einem erfindungsgemässen Verbinder ausgestattet ist. Weiterbildungen und/oder vorteilhafte Ausführungsvarianten der Erfindung sind Gegenstand der jeweiligen abhängigen Patentansprüche.

Durch die Erfindung wird ein speziell ausgebildeter Verbinder für Bohrrohre geschaffen, der mit einem Längsende eines Bohrrohrs stoffschlüssig verbindbar, insbesondere verschweissbar ist. Der Verbinder weist einen im wesentlichen zylindrischen, mit einer zentralen Durchgangsbohrung versehenen Körper auf, an dessen einem Längsende ein Verbindungsabschnitt für einen korrespondierend ausgebildeten Verbindungsabschnitt eines zweiten Verbinders ausgebildet ist und dessen zweites Längsende mit einem Kopplungsteil zur formschlüssigen Verbindung mit einem Längsende eines Bohrrohrs ausgestattet ist. Der Kopplungsteil ist an einem vom Verbindungsabschnitt abgewandten Einsteckabschnitt des Körpers ausgebildet, in dem sich die zentrale Durchgangsbohrung fortsetzt, und überragt den Einsteckabschnitt radial. Die zentrale Durchgangsbohrung weist im Anschluss an einen zylindrischen Bohrungsabschnitt einen zum freien Ende des Einsteckabschnitts kegelförmig erweiterten Bohrungsabschnitt auf.

Der erfindungsgemässe Verbinder weist den Vorteil auf, dass der Bereich, in dem der Verbinder stoffschlüssig mit dem Längsende eines Bohrrohres verbunden wird, räumlich vom zentralen Durchgangskanal getrennt ist. Der zentrale Durchgangskanal ist entlang seiner gesamten Längserstreckung vom Mantel des Körpers umhüllt. Dadurch können beim Verschweissen im Durchgangskanal keine Schweisswülste oder dergleichen entstehen, die beim Durchströmen des Durchgangskanal zu Turbulenzen führen könnten. Eine Nachbearbeitung der Innenwandung Bohrrohrs im Bereich der Schweissnaht ist nicht erforderlich. Im vom Verbindungsabschnitt abgewandten Endbereich des Körpers des Verbinders ist der zentrale Durchgangskanal zudem strömungstechnisch optimiert. Insbesondere ist der sonst zylindrische Durchgangskanal zum freien Ende des Einsteckabschnitts konisch erweitert ausgebildet. Berücksichtigt man, dass dieser Einsteckabschnitt des Verbinders in ein Bohrrohr eingesteckt wird, ist unmittelbar einsichtig, dass die erfindungsgemässe Formgebung zu einem nahezu stufenlosen Übergang zur Innenwandung des Bohrrohrs führt. Dadurch sind weitere Ursachen für die Bildung von Turbulenzen verhindert und der Strömungswiderstand für ein durchströmendes Medium wird insgesamt noch weiter verringert.

In einer vorgängigen Vergleichsausführung des Verbinders weist der Kopplungsteil eine zylindrische Aussenfläche auf, die zur aussendurchmesserkleineren Mantelfläche des Einsteckabschnitts einen konischen Übergang bildet. Dadurch ist der Kopplungsteil bereits für eine Kehlschweissung mit einem Bohrrohr vorbereitet. Der Aussendurchmesser im Bereich des Kopplungsteils ist grösser als der Aussendurchmesser des zylindrisch ausgebildeten Einsteckabschnitts und entspricht etwa dem Aussendurchmesser des Bohrrohrtyps, für den der Verbinder ausgebildet ist. Der Aussendurchmesser des zylindrischen Einsteckabschnitts kann dabei etwas kleiner als der Aussendurchmesser am Kopplungsabschnitt abzüglich der Wandstärke des Bohrrohrs sein, damit dieser leicht in das Bohrrohr einsteckbar ist. Es kann aber auch eine Variante vorgesehen sein, in der der Aussendurchmesser des zylindrischen Einsteckabschnitts dem Innendurchmesser des Bohrrohrs entspricht. Für die Montage des Verbinders wird das Ende des Bohrrohrs erwärmt, damit es sich erweitert. Der Verbinder ist dann zusätzlich durch einen Presssitz fixiert.

In erfindungsgemässer Ausführung des Verbinders ist der Kopplungsteil von einem rohrstutzenförmigen Mantelteil gebildet, der von zylindrischen Aussen- und Innenflächen begrenzt ist und durch eine axial verlaufende Hohlkehlung vom Einsteckabschnitt getrennt ist. Ein durch die axiale Hohlkehlung gebildeter Ringspalt trennt das rohrstutzenförmige Mantelteil vom Einsteckabschnitt. Der rohrstutzenförmige Mantelteil ist bereits für eine Verbindung mit einem Bohrrohr durch Reibschweissen ausgebildet. Der Ringspalt nimmt die beim Reibschweissen an der Innenfläche des rohrstutzenförmigen Mantelteils auftretenden Schweisswülste auf. Die an der Aussenfläche auftretenden Schweisswülste können einfach entfernt, beispielsweise abgedreht, werden.

Indem die Hohlkehlung eine in radialer Richtung des Körpers gemessene Breite aufweist, die grösser ist als eine Wandstärke des rohrstutzenförmigen Endabschnitts ist sichergestellt, dass die beim Reibschweissen erzeugten Schweisswülste in der Hohlkehlung ausreichend Platz finden. Der Einsteckabschnitt ist keinen besonderen Belastungen ausgesetzt und muss nur den Drücken des im Einsatz hindurch transportierten Spülmediums standhalten. Daher kann seine Wandstärke verringert ausgebildet sein, was wiederum der radialen Breite der Hohlkehlung zugute kommt. Als zweckmässig erweist sich eine Breite der Hohlkehlung, die etwa das Einfache bis etwa das Fünffache, bevorzugt etwa das Einfache bis etwa das Zweieinhalbfache der Wandstärke des rohrstutzenförmigen Mantelteils beträgt.

Der die zentrale Durchgangsbohrung aufweisende Einsteckabschnitt besitzt einen zylindrischen und einen zu seinem freien Ende hin schwalbenschwanzförmig erweiterten Teil. Dabei endet seine äussere Mantelfläche radial etwa auf Höhe einer gedachten Verlängerung der Innenfläche des rohrstutzenförmigen Mantelteils. Der maximale Aussendurchmesser des Einsteckabschnitts ist mit Vorteil etwas kleiner als der Innendurchmesser des rohrstutzenförmigen Mantelteils, damit dieser leicht in das Bohrrohr einsteckbar ist. Beispielsweise ist der Aussendurchmesser des Einsteckabschnitts 0.5 mm bis 2 mm kleiner als der Innendurchmesser des zugehörigen Bohrrohrs.

Um einen strömungstechnisch möglichst guten Übergang zu der Innenwandung eines Bohrrohrs schaffen zu können, nimmt der schwalbenschwanzförmig erweiterte Teil des Einsteckabschnitts etwa ein Drittel bis etwa die Hälfte der Gesamtlänge des Einsteckabschnitts ein.

Der zum freien Ende des Einsteckabschnitts hin kegelförmig erweiterte Abschnitt der Durchgangsbohrung weist eine Innenfläche auf, die mit der Achse des Körpers des Verbinders einen Winkel von etwa 2° bis etwa 16° einschliesst. Innerhalb dieses Winkelbereichs bieten sich für ein durchströmendes Medium besonders gute Strömungsverhältnisse.

Der Verbindungsabschnitt und der Einsteckabschnitt des Verbinders sind mit Vorteil durch einen polygonal ausgebildeten Mantelabschnitt voneinander getrennt. Der polygonal, beispielsweise viereckig, ausgebildete Mantelabschnitt dient zum Angriff eines Schraubwerkzeugs, dass beim Verbinden oder Lösen von Bohrrohren angesetzt wird.

Der Körper des Verbinders kann im polygonalen Einsteckabschnitt den gleichen Aussendurchmesser aufweisen, wie in den angrenzenden Bereichen. Vorzugsweise ist er im Durchmesser jedoch etwas reduziert, damit der Angriffsbereich für das Werkzeug unmittelbar ersichtlich ist. Ausserdem kann ein Werkzeug, insbesondere ein Schraubenschlüssel, mit einem kleineren Maul angesetzt werden.

Der Verbindungsabschnitt des erfindungsgemässen Verbinders kann als ein Zapfenteil mit einem Aussengewinde oder als ein Muffenteil mit einem Innengewinde ausgebildet sein. Das Zapfenteil und das Muffenteil können eine zylindrische Aussen- bzw. Innenkontur aufweisen. Vorzugsweise sind das Zapfenteil in Übereinstimmung mit in der Bohrtechnik etablierten Standards mit einer konischen Aussenkontur bzw. das Muffenteil mit einer korrespondierend konisch ausgebildeten Innenkontur ausgebildet.

Bohrrohre, mit Verbindern gemäss der Erfindung, weisen für ein durchströmendes Medium einen gegenüber dem Stand der Technik deutlich verbesserten Strömuingswiderstand auf. Indem die Schweissverbindungen der Verbinder mit den Enden des Bohrrohres in einem Bereich ausserhalb der zentralen Durchgangsbohrung angeordnet sind, werden Schweisswülste im Inneren der Durchgangsbohrung, die Turbulenzen hervorrufen könnten, vermieden. Die Schweisswülste an der Aussenseite des Bohrrohres werden in gewohnter Weise entfernt, beispielsweise abgedreht. Der Einsteckabschnitt des Verbinders ist dahingehend verbessert, dass das Einsteckende möglichst ungehindert in das Bohrrohrende einsteckbar ist, ohne dadurch im Verbinderbereich allzuviel an Querschnitt der Durchgangsbohrung zu verlieren. Die Durchgangsbohrung im Verbinder ist derart gestaltet, dass der Übergang von der Durchgangsbohrung des Verbinders zur Bohrung des Bohrrohres weitgehende stufenfrei erfolgt. Auch dadurch werden Turbulenzen verhindert und der Strömungswiderstand verringert.

Zweckmässigerweise weisen der bzw. die Verbinder und das Bohrrohr den gleichen Aussendurchmesser auf. Dadurch bestimmt allein der Aussendurchmesser des Bohrrohres den erforderlichen Durchmesser des Bohrkopfes.

Die Verbindung zwischen dem Bohrrohr dem Verbinder erfolgt stoffschlüssig. Dabei sind der Verbinder und das Bohrrohr durch Reibschweissen miteinander verschweisst.

Ein Bohrrohr üblicherweise an seinen beiden Längsenden je einen Verbinder auf, der mit dem Bohrrohr verschweisst ist. Dabei weist der Verbinder am einen Längsende ein Zapfenteil und der Verbinder am anderen Längsende ein Muffenteil auf.

Weitere Vorteile und Merkmale ergeben sich aus der nachfolgenden Beschreibung von Vergleichsbeispiel und erfindungsgemässer Ausführungsvarianten der Erfindung unter Bezugnahme auf die schematischen Zeichnungen. Es zeigen in nicht massstabsgetreuer Darstellung:
- Fig. 1: einen Axialschnitt eines mit einem Bohrrohr verschweissten Vergleichsbeispiels des Verbinders mit einem Zapfenteil;
- Fig.2: einen Axialschnitt eines mit einem Bohrrohr verschweissten Verbinders gemäss Fig. 1 mit einem Muffenteil;
- Fig. 3: einen Axialschnitt eines mit einem Bohrrohr verschweissten erfindungsgemässen Ausführungsbeispiels des Verbinders mit einem Zapfenteil; und
- Fig. 4: einen Axialschnitt eines mit einem Bohrrohr verschweissten Verbinders gemäss Fig. 3 mit einem Muffenteil.

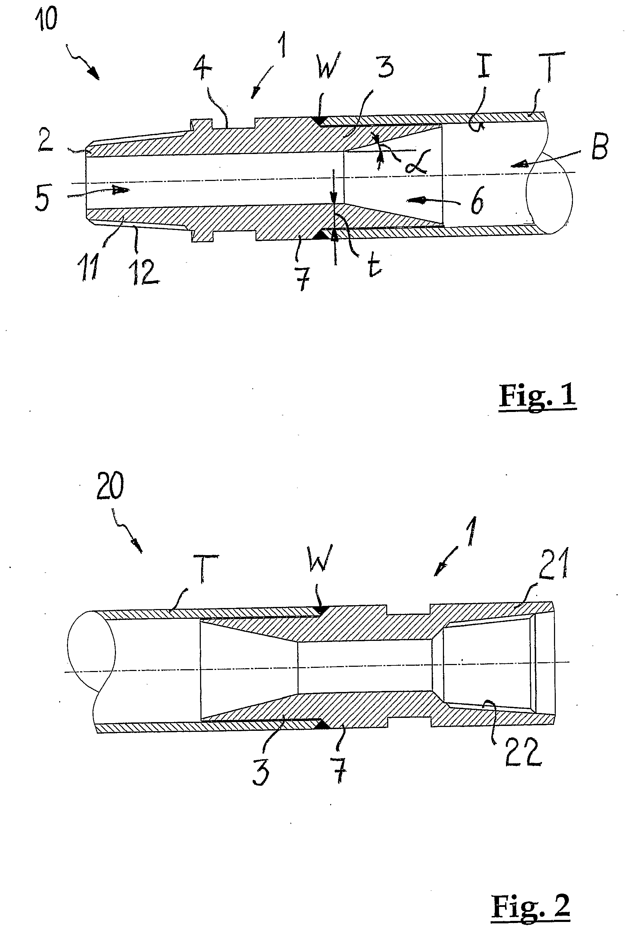

In den Darstellungen in Fig. 1 bis Fig. 4 tragen gleiche Elemente bzw. Bauteile jeweils das gleiche Bezugszeichen.

Das in Fig. 1 und Fig. 2 dargestellte Vergleichsbeispiel eines Verbinders trägt gesamthaft das Bezugszeichen 10 bzw. 20. Die beiden Verbinder 10, 20 unterschieden sich dadurch, dass ein Verbindungsabschnitt 2 einmal (Fig. 1) als ein Zapfenteil 11 mit einem Aussengewinde 12 und das andere mal (Fig. 2) als ein Muffenteil 21 mit einem Innengewinde 22 ausgebildet ist. In den Figuren sind die Verbinder 10, 20 mit dem Längsende eines Bohrrohres verschweisst, das durch das Bezugszeichen T angedeutet ist. Jeder Verbinder 10 bzw. 20 weist einen im wesentlichen zylindrischen Körper 1 auf. Das eine Längsende des Körpers 1 ist als ein Verbindungsabschnitt 2 für die Verbindung mit einem korrespondierend ausgebildeten Verbindungsabschnitt am Längsende eines weiteren Bohrrohres ausgebildet. Das zweite Längsende des Körpers 1 bildet einen Einsteckabschnitt 3, der in die Bohrung B eines Bohrrohrs T einsteckbar ist. Der Verbindungsabschnitt 2 und der Einsteckabschnitt 3 werden durch einen polygonal, beispielsweise viereckig, ausgebildeten Mantelabschnitt 4 voneinander getrennt, der einen kleineren Aussendurchmesser aufweist als die beiden angrenzenden Bereiche.

Eine zentrale Durchgangsbohrung 5 erstreckt sich durch den Körper 1 des Verbinders 10, 20. Im Einsteckabschnitt 3 weist die Durchgangsbohrung 5 einen konisch erweiterten Bereich 6 auf. Der konisch erweiterte Bereich 6 der Durchgangsbohrung 5 schliesst mit der Längsachse des Körpers 1 einen Winkel α ein, der etwa 2° bis etwa 16° beträgt. Der konisch erweiterte Bereich 6 der Durchgangsbohrung 5 wird beispielsweise durch eine kontinuierliche Wandstärkenverringerung des Einsteckbereichs 3 erzielt. Im montierten Zustand geht deshalb der Einsteckabschnitt 3 des Verbinders 10, 20 nahezu stufenlos in die Innenwandung I des mit einer axialen Bohrung B versehenen Bohrrohres über.

Für die Verbindung mit dem Bohrrohr T weist der Verbinder 10, 20 einen den Einsteckbereich 3 radial überragenden Kopplungsteil auf 7. Der Kopplungsteil 7 verjüngt sich konisch bis zum Mantel des Einsteckabschnitts 3. Dadurch ist der Kopplungsteil 7 bereits für eine Kehlverschweissung mit dem entsprechend abgeschrägten Längsende des Bohrrohrs T vorbereitet. Zur Montage wird der zylindrische Einsteckabschnitt 3 des Verbinders 10, 20 durch das Längsende in die Bohrung B des Bohrrohrs T eingesteckt bis die Abschrägungen des Kopplungsteils und des Längsendes des Bohrrohrs aneinandergrenzen und eine umlaufende Kerbe bilden. Die Verbindung des Verbinders 10, 20 mit dem Längesende des Bohrrohrs T erfolgt durch eine Kehlnaht W, die im Bereich der V-förmigen Kerbe gesetzt wird. Nach einer Wärmebehandlung, in der die Spannungen in den beiden Bauteilen und in der Schweissnaht abgebaut werden, ist die Schweissverbindung belastbar.

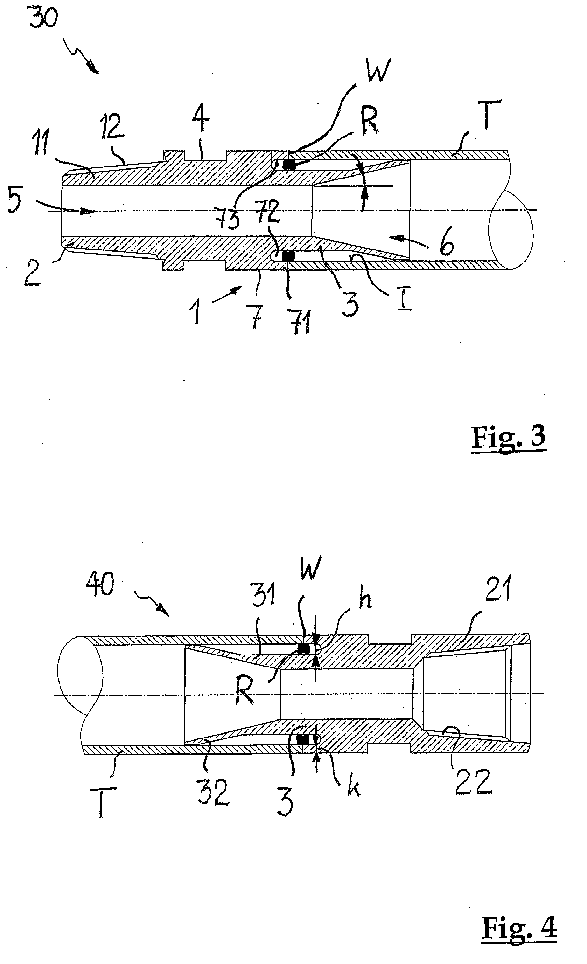

Die in Fig. 3 und Fig. 4 dargestellten erfindungsgemässen Verbinder tragen die Bezugszeichen 30 bzw. 40. Dabei ist mit 30 ein Verbinder mit einem Zapfenteil 11 mit einem Aussengewinde 12 bezeichnet, während der mit dem Bezugszeichen 40 versehene Verbinder ein Muffenteil 21 mit einem Innengewinde 22 aufweist. In Analogie zu den Darstellungen in Fig. 1 und 2 sind die Verbinder 30, 40 mit den Längsenden eines Bohrrohres T verschweisst, das wiederum durch das Bezugszeichen T angedeutet ist. Jeder Verbinder weist wiederum einen im wesentlichen zylindrischen Körper 1 auf, dessen eines Längsende mit einem Verbindungsabschnitt 2 ausgestattet ist, während das zweite Längsende als ein Einsteckabschnitt 3 ausgebildet ist. Der Verbindungsabschnitt 2 und der Einsteckabschnitt 3 sind durch einen polygonal ausgebildeten, beispielsweise sechseckigen Mantelabschnitt 4 voneinander getrennt. Der polygonale Mantelabschnitt 4 weist einen kleineren Aussendurchmesser auf als die angrenzenden Abschnitte des Körpers.

Am Übergang des Einsteckabschnitts 3 zum polygonalen Mantelabschnitt 4 ist ein Kopplungsteil 7 vorgesehen, welches aus einem rohrstutzenförmigen Mantelteil 71 besteht, der vom Einsteckabschnitt durch eine in axiale Richtung verlaufende Hohlkehlung 72 getrennt ist. Durch die Hohlkehlung 72 ist zwischen dem rohrstutzenförmigen Mantelteil 71 und dem Einsteckabschnitt 3 ein Ringspalt gebildet, dessen in radialer Richtung gemessene Breite h etwa das Einfache bis etwa das Fünffache, vorzugsweise etwa das Einfache bis etwa das Zweieinhalbfache der Wandstärke k des rohrstutzenförmigen Mantelteils 71 beträgt.

Der Einsteckabschnitt 3 weist einen zylindrischen Teil 31 und einen daran anschliessenden, schwalbenschwanzförmig erweiterten Endabschnitt 32 auf. Der schwalbenschwanzförmig erweiterte Endabschnitt 32 erstreckt sich radial bis etwa zu einer gedachten Verlängerung einer Innenfläche 73 des rohrstutzenförmigen Mantelteils 71. Eine im wesentlichen zylindrische zentrale Durchgangsbohrung weist im schwalbenschwanzförmig erweiterten Endabschnitt 32 eine konische Erweiterung 6 auf. Am freien Ende des Einsteckabschnitts 3 ist die Wandstärke derart reduziert, dass im montierten Zustand ein weitgehend stufenloser Übergang vom konisch erweiterten Bohrungsabschnitt 6 der zentralen Durchgangsbohrung 5 des Verbinders 30, 40 zur Bohrung B des Bohrrohrs erfolgt.

Der als rohrstutzenförmiger Mantelteil 71 ausgebildete Kopplungsteil 7 dient bei einer stumpfen Reibschweissung als Gegenstück für das stumpfe Längsende des Bohrrohres T. Bei der Reibschweissung entstehen an den miteinander verschweissten Bauteilen Schweisswülste R. An der Aussenseite des Bohrrohres B können diese sehr einfach, beispielsweise durch Abdrehen, entfernt werden. In Fig. 3 und 4 wurde daher auf die Darstellung der an der Aussenseite des Bohrrohres auftretenden Schweisswülste verzichtet. Die Schweisswülste R an der Innenfläche 73 des rohrstutzenförmigen Mantelteils 71 bzw. an der Innenwandung I des Bohrrohrs T werden in dem von der Hohlkehlung 72 gebildeten Ringspalt zwischen dem rohrstutzenförmigen Mantelteil 71 bzw. dem Mantel des Bohrrohrs und dem Einsteckabschnitt 3 aufgenommen. Sie können nicht in den Bereich der Durchgangsbohrung 5, 6 des Verbinders kommen, da diese durch den Einsteckabschnitt 3 abgeschirmt ist. Dadurch bleibt die Durchgangsbohrung 5, 6, B durch den Verbinder 30, 40 und das Bohrrohr auch nach dem Reibschweissen hindernisfrei. Es versteht sich, dass die in Fig. 3 angedeutete Länge 1 des rohrstutzenförmigen Mantelteils 71 durch die Reibschweissung verringert ist. Die vorstehend spezifizierten Länge 1 gilt daher für den Ausgangszustand des Verbinders 30, 40 vor dem Reibschweissen.

Die in Fig. 1 und 3 dargestellten Zapfenteile 11 mit Aussengewinden 12 weisen vorzugsweise eine sich zum freien Ende konisch verjüngende Aussenkontur auf. Analog sind die in den Fig. 2 und 4 dargestellten Muffenteile 21 mit Innengewinden 22 mit einer sich zum freien Ende hin erweiternden Innenkontur versehen.

Die Verbinder 10, 20, 30, 40 bestehen aus hoch legiertem Stahl. Auch die Bohrrohre bestehen aus legiertem Stahl. In Fig. 1 bis Fig. 4 ist jeweils nur ein Abschnitt eines Bohrrohres T mit einem Zapfenverbinder 10, 30 bzw. mit einem Muffenverbinder 20, 40 dargestellt. Ein Bohrgestänge wird aus einzelnen Bohrrohren zusammengestellt. Dazu weisen die Bohrrohre jeweils am einen Längsende einen Zapfenverbinder 10, 30 und am anderen Längsende einen Muffenverbinder 20, 40 auf. Es können aber auch Bohrrohre vorgesehen sein, die nur an einem Längsende mit einem Zapfen- oder Muffenverbinder verschweisst sind und am anderen Längsende eine andere Kopplungseinrichtung aufweisen.

## Patentansprüche

1. Verbinder für Bohrrohre, der mit einem Längsende eines Bohrrohrs (B) durch Reibschweissen materialschlüssig verbindbar ist, umfassend einen im wesentlichen zylindrischen, mit einer zentralen Durchgangsbohrung versehenen Körper (1), an dessen einem Längsende ein Verbindungsabschnitt (2) für einen korrespondierend ausgebildeten Verbindungsabschnitt (2) eines zweiten Verbinders ausgebildet ist und dessen zweites Längsende ein Kopplungsteil (7) zur formschlüssigen Verbindung mit einem Längsende eines Bohrrohrs (B) aufweist, wobei der Kopplungsteil (7) an einem vom Verbindungsabschnitt (2) abgewandten Einsteckabschnitt (3) des Körpers (1) ausgebildet ist, in dem sich die zentrale Durchgangsbohrung (5) fortsetzt, und den Einsteckabschnitt (3) radial überragt, die zentrale Durchgangsbohrung (5) im Anschluss an einen zylindrischen Bohrungsabschnitt einen zum freien Ende des Einsteckabschnitts (3) kegelförmig erweiterten Bohrungsabschnitt (6) aufweist, der kegelförmig erweiterte Bohrungsabschnitt (6) eine Innenfläche aufweist, die mit der Achse des Körpers einen Winkel (α) von 2° bis 16° einschliesst, **dadurch gekennzeichnet, dass** der Kopplungsteil (7) von einem rohrstutzenförmigen Mantelteil (71) gebildet ist, der von zylindrischen Aussen- und Innenflächen begrenzt ist und durch eine axial verlaufende Hohlkehlung (72) vom Einsteckabschnitt (3) getrennt ist.

2. Verbinder nach Anspruch 1, **dadurch gekennzeichnet, dass** die Hohlkehlung (72) eine in radialer Richtung des Körpers gemessene Breite (h) aufweist, die grösser ist als eine Wandstärke (k) des rohrstutzenförmigen Mantelteils (71).

3. Verbinder nach einem der Ansprüche 1 - 2, **dadurch gekennzeichnet, dass** der die zentrale Durchgangsbohrung (5, 6) aufweisende Einsteckabschnitt (3) einen zylindrischen (31) und einen zu seinem freien Ende hin schwalbenschwanzförmig erweiterten Teil (31) aufweist, und seine Mantelfläche radial etwa auf Höhe einer gedachten Verlängerung der Innenfläche (73) des rohrstutzenförmigen Mantelteils (71) endet.

4. Verbinder nach Anspruch 3, **dadurch gekennzeichnet, dass** der schwalbenschwanzförmig erweiterte Teil (32) des Einsteckabschnitts (3) etwa ein Drittel bis etwa die Hälfte der Gesamtlänge des Einsteckabschnitts (3) einnimmt.

5. Verbinder nach einem der vorhergehenden Ansprüche, **dadurch gekennzeichnet, dass** der Verbindungsabschnitt (2) und der Einsteckabschnitt (3) durch einen polygonal ausgebildeten Mantelabschnitt (4) voneinander getrennt sind.

6. Verbinder nach einem der vorhergehenden Ansprüche, dadurch gekennzeichet, dass der Verbindungsabschnitt (2) ein Zapfenteil (11) mit einem Aussengewinde (12) ist.

7. Verbinder nach Anspruch 6, **dadurch gekennzeichnet, dass** das Zapfenteil (11) eine sich zum freien Ende hin konisch verjüngende Aussenkontur aufweist.

8. Verbinder nach einem der Ansprüche 1 - 7, **dadurch gekennzeichnet, dass** der Verbindungsabschnitt (2) ein Muffenteil (21) mit einem Innengewinde (22) ist.

9. Verbinder nach Anspruch 8, **dadurch gekennzeichnet, dass** das Muffenteil (21) eine sich zu seinem freien Ende hin konisch erweiternde Innenkontur aufweist.

10. Verbinder nach einem der vorhergehenden Ansprüche, dadurch gekennzeichet, dass die in radialer Richtung gemessene Breite (h) der Hohlkehlung (72) etwa das Einfache bis etwa das Fünffache, vorzugsweise etwa das Einfache bis etwa das Zweieinhalbfache der Wandstärke (k) des rohrstutzenförmigen Mantelteils (71) beträgt.

11. Verbinder nach einem der vorhergehenden Ansprüche, dadurch gekennzeichet, dass die zentrale Durchgangsbohrung (5) im Einsteckabschnitt (3) im Anschluss an den zylindrischen Bohrungsabschnitt den zum freien Ende des Einsteckabschnitts (3) kegelförmig erweiterten Bohrungsabschnitt (6) aufweist.

12. Bohrrohr mit wenigstens einem Verbinder (30; 40) gemäss einem der vorangehenden Ansprüche.

13. Bohrrohr nach Anspruch 12, **dadurch gekennzeichnet, dass** der Verbinder (30; 40) am Kopplungsteil (7) den gleichen Aussendurchmesser aufweist wie das Bohrrohr (B).

14. Bohrrohr gemäss einem der Ansprüche 12 -13, **dadurch gekennzeichnet, dass** an seinen beiden Längsenden ein Verbinder (30; 40) stoffschlüssig befestigt ist und der Verbinder (30) am einen Längsende ein Zapfenteil (11) und der Verbinder (40) am anderen Längsende ein Muffenteil (21) aufweist.

## Claims

1. Connector for drill pipes, that can be materially connected by friction welding with a longitudinal end of a drill pipe (B), comprising a substantially cylindrical body (1), provided with a central through hole, at one longitudinal end of which a connecting section (2) is configured for a correspondingly configured connecting section (2) of a second connector and the second longitudinal end of which has a coupling part (7) for the form-fitting connection with a longitudinal end of a drill pipe (B), wherein the coupling part (7) is configured on a plug-in section (3) of the body (1), that is facing away from the connecting section (2), in which the central through hole (5) continues and radially projects over the plug-in section (3), the central through hole (5) has a hole section (6) following a cylindrical hole section and conically widened to the free end of the plug-in section (3), the conically widened hole section (6) has an inner face that encloses an angle (α) of 2° to 16° with the axis of the body, **characterized in that** the coupling part (7) is formed by a lateral part with the form of a connecting sleeve (71) that is limited by cylindrical outer and inner faces and that is separated from the plug-in section (3) by an axially extending concave groove (72).

2. Connector according to claim 1, **characterized in that** the concave groove (72) has a width (h) measured in the radial direction of the body that is greater than a wall thickness (k) of the lateral part with the form of a connecting sleeve (71).

3. Connector according to one of the claims 1 to 2, **characterized in that** the plug-in section (3) that has a central through hole (5, 6) has a cylindrical part (31) and a part widened as a dovetail (32) towards the free end thereof and its lateral surface ends radially approximately at the level of an imaginary extension of the inner face (73) of the lateral part with the form of a connecting sleeve (71).

4. Connector according to claim 3, **characterized in that** part widened as a dovetail (32) of the plug-in section (3) takes approximately a third to approximately half the overall length of the plug-in section (3).

5. Connector according to one of the preceding claims, **characterized in that** the connecting section (2) and the plug-in section (3) are separated from each other by a lateral section (4) with the form of a polygon.

6. Connector according to one of the preceding claims, **characterized in that** the connecting section (2) is a pin part (11) with an outer thread (12).

7. Connector according to claim 6, **characterized in that** the pin part (11) has an outer contour that is conically tapering towards the free end.

8. Connector according to one of the claims 1 to 7, **characterized in that** the connecting section (2) is a sleeve part (21) with an inner thread (22).

9. Connector according to claim 8, **characterized in that** the sleeve part (21) has an inner contour that is conically tapering towards the free end thereof.

10. Connector according to one of the preceding claims, **characterized in that** the width (h) of the concave groove (72), measured in the radial direction, is approximately one to approximately five times the wall thickness (k) of the lateral part with the form of a connecting sleeve (71).

11. Connector according to one of the preceding claims, **characterized in that** the central through hole (5) has the hole section (6) conically tapering to the free end of the plug-in section (3) that follows the cylindrical hole section in the plug-in section (3).

12. Drill pipe with at least one connector (30, 40) according to one of the preceding claims.

13. Drill pipe according to claim 12, **characterized in that** the connector (30, 40) has the same outer diameter on the coupling part (7) than the drill pipe (B).

14. Drill pipe according to one of the claims 12-13, **characterized in that** a connector (30, 40) is firmly bonded to its both longitudinal ends and the connector (30) has a pin part (11) at one longitudinal end and the connector (40) a sleeve part (21) at the other longitudinal end.

## Revendications

1. Raccord pour tubes de forage, qui peut être raccordé par liaison de matière par soudage par friction à une extrémité longitudinale d'un tube de forage (B), qui comprend un corps (1) sensiblement cylindrique, pourvu d'un trou traversant central, à l'une des extrémités longitudinales duquel une section de liaison (2) est configurée pour une section de liaison configurée de manière correspondante (2) d'un second raccord et dont la seconde extrémité longitudinale présente une partie de couplage (7) pour la liaison par ajustement de forme avec une extrémité longitudinale d'un tube de forage (B), cependant que la partie de couplage (7) est configurée sur une section d'emboîtement (3) du corps (1), qui est opposée à la section de liaison (2), dans laquelle le trou traversant central (5) se poursuit et qui fait saillie radialement de la section d'emboîtement (3), le trou traversant central (5) présente, à la suite d'une section de trou cylindrique, une section de trou élargie en forme de cône (6) vers l'extrémité libre de la section d'emboîtement (3), la section de trou élargie en forme de cône (6) présente une face intérieure qui forme, avec l'axe du corps, un angle (α) de 2° à 16°, **caractérisé en ce que** la partie de couplage (7) est formée par une partie enveloppante en forme de manchon tubulaire (71) qui est délimitée par des faces extérieures et intérieures cylindriques et qui est séparée de la section d'emboîtement (3) par une gorge creuse (72) qui s'étend dans le sens axial.

2. Raccord selon la revendication 1, **caractérisé en ce que** la gorge creuse (72) présente une largeur (h) mesurée dans le sens radial du corps qui est supérieure à une épaisseur de paroi (k) de la partie enveloppante en forme de manchon tubulaire (71).

3. Raccord selon l'une des revendications 1 à 2, **caractérisé en ce que** la section d'emboîtement (3) qui présente le trou traversant central (5, 6) présente une partie cylindrique (31) et une partie élargie en forme de queue d'aronde (32) vers son extrémité libre et que sa surface enveloppante se termine radialement à peu près à hauteur d'un prolongement imaginaire de la face intérieure (73) de la partie enveloppante en forme de manchon tubulaire (71).

4. Raccord selon la revendication 3, **caractérisé en ce que** la partie élargie en forme de queue d'aronde (32) de la section d'emboîtement (3) prend environ un tiers jusqu'à environ la moitié de la longueur totale de la section d'emboîtement (3).

5. Raccord selon l'une des revendications précédentes, **caractérisé en ce que** la section de liaison (2) et la section d'emboîtement (3) sont séparées l'une de l'autre par une section enveloppante (4) configurée en polygone.

6. Raccord selon l'une des revendications précédentes, **caractérisé en ce que** la section de liaison (2) est une partie formant appendice (11) avec un filet extérieur (12).

7. Raccord selon la revendication 6, **caractérisé en ce que** la partie formant appendice (11) présente un contour extérieur qui s'effile de manière conique vers l'extrémité libre.

8. Raccord selon l'une des revendications 1 à 7, **caractérisé en ce que** la section de liaison (2) est une partie manchon (21) avec un filet intérieur (22).

9. Raccord selon la revendication 8, **caractérisé en ce que** la partie manchon (21) présente un contour intérieur qui s'effile de manière conique vers son extrémité libre.

10. Raccord selon l'une des revendications précédentes, **caractérisé en ce que** la largeur (h) de la gorge creuse (72), mesurée dans le sens radial, est à peu près d'environ une à environ cinq fois, de préférence à peu près d'environ une à environ deux fois et demie l'épaisseur de paroi (k) de la partie enveloppante en forme de manchon tubulaire (71).

11. Raccord selon l'une des revendications précédentes, **caractérisé en ce que** le trou traversant central (5) présente, dans la section d'emboîtement (3) à la suite de la section cylindrique de trou, la section de trou (6) élargie en cône vers l'extrémité libre de la section d'emboîtement (3).

12. Tube de forage avec au moins un raccord (30, 40) selon l'une des revendications précédentes.

13. Tube de forage selon la revendication 12, **caractérisé en ce que** le raccord (30, 40) présente, sur la partie de couplage (7), le même diamètre extérieur que le tube de forage (B).

14. Tube de forage selon l'une des revendications 12-13, **caractérisé en ce qu'**un raccord (30, 40) est fixé par liaison de matière à ses deux extrémités longitudinales et le raccord (30) présente, à une extrémité longitudinale, une partie formant appendice (11) et le raccord (40) une partie manchon (21) à l'autre extrémité longitudinale.
